# EUROPÄISCHE PATENTANMELDUNG

(11) **EP 0 752 774 A1**
(43) Veröffentlichungstag der Anmeldung: **08.01.1997**
(21) Anmeldenummer: 96110916.2
(22) Anmeldetag: 05.07.1996
(51) Int. Cl.: H04L 12/28, H04L 12/46, H04Q 11/04

(54) **Verfahren zum Übermitteln von Informationspaketen zwischen Emulierten LAN's**

(30) Priorität: 05.07.1995 DE 19524504; 28.09.1995 DE 19536202
(71) Anmelder: SIEMENS AKTIENGESELLSCHAFT, 80333 München (DE)
(72) Erfinder: Karapetkov, Stefan, 81369 München (DE); Petri, Bernhard, 81379 München (DE); Fromm, Ingrid, Dipl.Phys., 81477 München (DE)

(57) **Zusammenfassung**

Verfahren zum Übermitteln von Informationspaketen zwischen einem Ursprungs-LEC eines ersten ELAN und einem Ziel-LEC eines zweiten ELAN, mit den folgenden Verfahrensschritten:
- Übertragung einer eine Verbindungsaufbauanfrageinformation enthaltenden Adreßauflösungsanfrage des Ursprungs-LEC über ein CLS-Weitverkehrsnetz zum zweiten ELAN;
- Übermitteln der Verbindungsaufbauanfrageinformation innerhalb des zweiten ELAN an den Ziel-LEC;
- Veranlassen eines Verbindungsaufbaus zwischen Ursprungs-LEC und Ziel-LEC über ein dem ersten ELAN und dem zweiten ELAN übergeordnetes ATM-Netz durch den Ziel-LEC; und
- Übermitteln der Informationspakete über das übergeordnete ATM-Netz.

## Beschreibung

Die Erfindung betrifft ein Verfahren zum Übermitteln von Informationspaketen zwischen einem Ursprungs-LAN-/Emulation-Client LEC eines ersten ELAN und einem LAN-Emulation-Client eines zweiten ELAN.

ELAN steht für emuliertes LAN, wie es insbesondere beschrieben ist in der Spezifikation 94-0035R9, "LAN Emulation Over ATM: Version 1.0" der LAN Emulation SWG Drafting Group des ATM Forum vom 6. Januar 1995, Editor: Bill Ellington. Hierbei handelt es sich um einen Ansatz des ATM-Forums ZurMigration von heutigen LANs zu ATM-Netzen. ATM bedeutet hierbei "Asynchronus Transfer Mode", also asynchrones Daten- bzw. Informationsübertragungsverfahren. LAN ist eine Abkürzung von "Local Area Network". Bei LANs handelt es sich um datagrammorientierte Lokalnetze, die u.a. in dem Artikel von David D. Clark, Kenneth D. Progran und David P. Reed, "An Introduction to Local Area Networks" in Proceedings of the IEEE, Vol. 66, No. 11, November 1978 auf den Seiten 1497 bis 1517 beschrieben sind. Außerdem sind LANs in ISO/IEC TR 8802-1, "Overview of LAN-Standards beschrieben. LANs bieten einen verbindungslosen Dienst, den sogenannten MAC-Service, an. MAC steht hierbei für "Media Access Control". Im Gegensatz zu diesem verbindungslosen Dienst ist die ATM-Technologie verbindungsorientiert. Sollen die für LANs entwickelten Protokolle der höheren Schichten in auf der Basis eines ATM-Netzes emulierten LANs benutzt werden, müssen in diesem ATM-Netz die Eigenschaften des verbindungslosen MAC-Dienstes erbracht werden. Die LAN-Emulation gemäß der obengenannten Spezifikation realisiert den MAC-Dienst im lokalen ATM-Netz und definiert damit ein einzelnes emuliertes LAN, im folgenden. ELAN genannt. In diesem ELAN können die üblichen LAN-Protokolle wie LLC, TCP/IP, SPX/IPX oder TP/CLNP benutzt werden.

Die LAN-Emulation unterstützt die beiden am häufigsten verwendeten LAN-Standards, nämlich Ethernet gemäß IEEE 802.3 und Token-Ring gemäß IEEE 802.5, wobei bei Token-Ring drei Rahmenlängen unterstützt werden. Die Adressierung jeder LAN-Station erfolgt anhand einer weltweit eindeutigen Ziel-MAC-Adresse. Zur Übertragung von Informationen zwischen LANs werden von einer höheren Schicht übergebenen. Token-Ring-LANs verwenden zur Beschreibung des Informationsweges zusätzlich zu MAC-Adressen sogenannte Route Descriptors im Rahmenkopf. Anhand eines solchen Descriptors kann der Rahmen innerhalb von Token-Ring-LANs zum Ziel befördert werden.

Im folgenden wird nur von MAC-Adressen gesprochen.

Zur Emulation eines LAN in einem ATM-Netz muß die LAN-Emulation u.a. Ziel-MAC-Adressen in Ziel-ATM-Adressen auflösen, Multicast und Broadcast realisieren, also eine Verteilung von Information an mehrere oder an alle Teilnehmer, sowie die Übertragung von LAN-Emulation-Rahmen in der richtigen Reihenfolge sicherstellen. Die LAN-Emulation hat eine Client-Server-Konfiguration. Die Clienten-Seite wird LAN-Emulation-Client LEC genannt und die Server-Seite wird LAN-Emulation-Service genannt. Der LAN-Emulation-Service besteht aus LAN-Emulation-Server LES, Broadcast-and-Unknown-Server BUS und LAN-Emulation-Configration-Server LECS. Der LAN-Emulation-Client bekommt von einer übergeordneten Schicht, beispielsweise der LLC-Schicht, die Ziel-MAC-Adresse und muß die entsprechende ATM-Adresse finden, um daraufhin den Aufbau einer direkte ATM-Verbindung zum Ziel durch Signalisierung zu veranlassen. Die Signalisierung kann hierbei beispielsweise nach der ITU-T-Empfehlung Q.2931/Q.2971 erfolgen. Ein LAN-Emulation-Client kann in der Software oder in der Hardware der Stationen realisiert sein, die an der LAN-Emulation teilnehmen.

Ein LAN-Emulation-Server LES unterhält eine Tabelle mit allen MAC-Adressen, die im emulierten LAN beispielsweise im Rahmen einer Konfigurierung angemeldet sind, und mit den entsprechenden ATM-Adressen. Zwischen den LAN-Emulation-Clienten und dem LAN-Emulation-Server erfolgt die Kommunikation nach einem LAN-Emulation-Adressenauflösungsprotokoll, das entsprechend der englischen Bezeichnung LAN Emulation Address Resolution Protocoll mit LE_ARP bezeichnet wird. Kennt ein LAN-Emulation-Client die Ziel-ATM-Adresse einer Ziel-MAC-Adresse nicht, so sendet er eine Anfrage mit der Ziel-MAC-Adresse an den LAN-Emulation-Server. Eine solche Anfrage zur Adreßauflösung wird mit LE_ARP Request bezeichnet. Falls der LES die Ziel-ATM-Adresse auflösen kann, antwortet er mit LE_ARP Response. Wenn nicht, schickt er die Anfrage an weitere LAN-Emulation-Clienten.

Erhält ein LAN-Emulation-Client eine Adreßauflösungsantwort LE_ARP Response, so baut er zu der hierin enthaltenen ATM-Adresse eine ATM-UBR-Verbindung auf und sendet einen Unicast-Rahmen. UBR bedeutet hierbei "Unspecified Bit Rate", gibt also an, daß die Bitrate nicht festgelegt ist. Ein Unicast-Rahmen ist ein Informations- bzw. Datenpaket mit einem einzigen Adressaten. Bei der Übertragung von Rahmen innerhalb eines ELAN wird zwischen Unicast-Rahmen an einen Empfänger und Multicast- oder Broadcast-Rahmen an mehrere oder alle Empfänger unterschieden. Eine ATM-UBR-Verbindung bleibt ab dem letzten gesendeten Rahmen für 20 Minuten bestehen, damit weitere Rahmen auf einfache Weise zum selben Empfänger geschickt werden können. Hierzu wird auf die Variable C12 in Punkt 5.1.1 der LAN-Emulation-Spezifikation verwiesen. Im LAN-Emulation-Client werden mit Hilfe eines Cash-Mechanismus die Ziel-ATM-Adressen von Ziel-MAC-Adressen eine bestimmte Zeit lang gespeichert. Falls keine Verbindung zu einem Ziel-LAN-Emulation-Client besteht, die Ziel-ATM-Adresse jedoch im Sender-LAN-Emulation-Client bekannt ist, kann ein Sender-LAN-Emulation-Client LEC eine Verbindung ohne Adreßauflösungsanfrage aufbauen und einen Unicast-Rahmen senden.

Multicast-Rahmen an eine Gruppe von Teilnehmern bzw. LAN-Emulation-Clienten und Broadcast-Rahmen an alle Teilnehmer bzw. LAN-Emulation-Client LECen werden an den obengenannten BUS geschickt. Innerhalb eines ELAN unterhält der BUS Verbindungen zu allen LEC die angekommenen Rahmen an die Adressaten.

Jeder LAN-Emulation-Client kann bei der Konfigurierung als sogenannter Proxy-LEC angemeldet werden. Ein Proxy-LAN-Emulation-Client erhält alle Adreßauflösungsanfragen LE_ARP Request, die ein LES nicht auflösen kann. Außerdem erhält ein Proxy-LEC alle Multicast- und alle Broadcast-Rahmen.

Der Vorteil der ATM-Technologie ist u.a. darin zu sehen, daß direkte Verbindungen mit flexibler Bandbreite zwischen den Kommunikationspartnern aufgebaut werden können. Solche direkte Verbindungen garantieren minimale Zeitverzögerungen und eine hohe Informationsübertragungsrate. Dieser Vorteil der ATM-Technologie wird in der LAN-Emulation für Unicast-Rahmen genutzt. In dem Artikel "Interconnect Emulated LANs with White Area ATM Networks" von Peter T.P. Chang und Bill Ellington, ATM Forum Technical Committee vom 29. November - 2. Dezember 1994 sind verschiedene Konzepte bekannt, lokale ATM-Netze, wie z.B. ELANs über ein Weitverkehrs-ATM-Netz zu verbinden. In einem ersten Konzept sind hierbei mehrere ELANs an ein Weitverkehrs-ATM-Netz angeschlossen, wobei die Adreßauflösung und die Datenübertragung über einen einzigen LAN-Emulation-Server und einen einzigen BUS vorgenommen werden. Dieses Konzept führt zu einem enormen Verkehrsaufkommen zur Realisierung der Broadcast-Funktion. Die Adreßauflösungsverzögerungszeiten in einem solchen Netz sind extrem hoch.

Ein weiteres Konzept sieht vor, ELANs jeweils über Fernbrücken (Remote Bridges) an ein Weitverkehrs-ATM-Netz anzuschließen. Hierbei sind entweder alle Fernbrücken über permanente virtuelle Leitungen PVC (Permanent Virtual Circuit) miteinander verbunden oder die Fernbrücken sind unter Verwendung eines Adreßauflösungs-Servers mit Hilfe einer ATM-Signalisierung dynamisch miteinander verbunden. Hierbei sind die Übertragungsmöglichkeiten durch die Übertragungsmöglichkeiten der Fernsteuerbrücken und die Bandbreite der permanenten virtuellen Leitungen zwischen zwei Fernsteuerbrücken beschränkt. Die Fernbrücken werden mit Broadcast-Rahmen von Broadcast and Unknown Servern ferner ELANs überflutet, sofern deren Fernbrücke jeweils nicht die Adresse der den Ziel-MAC-Adressen zugeordneten Fernbrücken kennt.

Ein weiteres Konzept sieht vor, anstelle der Fernbrücken Brouter vorzusehen, eine Mischung aus Brücke und Rrouter. Diese Brouter erfüllen in diesem Fall auf der ELAN-Seite die Funktion einer LAN-Emulations-Brücke und auf der Seite des ATM-Weitverkehrsnetzes die Funktionen eines Routers. Dadurch werden die Broadcast-Probleme reduziert, eine Beschränkung der Übertragungsmöglichkeiten über das ATM-Weitbereichsnetz durch die Übertragungsmöglichkeiten der Brouter und der permanenten virtuellen Leitungen bleibt jedoch bestehen.

Ein weiteres Konzept sieht vor, die LAN-Emulation-Server der einzelnen ELANs sowie die BUS der einzelnen ELANs miteinander durch Direktverbindungen zu verbinden. Dies führt jedoch zu einer großen Anzahl von Direktverbindungen und zu einem hohen Verkehrsaufkommen zwischen den LAN-Emulation-Servern und den BUS der einzelnen ELANs. Das Verkehrsaufkommen steigt hierbei linear mit der Anzahl der verbundenen ELANs. Ein weiteres Konzept sieht vor, die LAN-Emulation-Server der einzelnen ELANs sowie die BUS der einzelnen ELANs über Direktverbindungen an einen übergeordneten LAN-Emulation-Server bzw. einen übergeordneten BUS zu verbinden. Dies führt jedoch ebenfalls zu einer großen Anzahl von Direktverbindungen und zu einem hohen Verkehrsaufkommen. Die Mehrschichtigkeit von BUS und übergeordnetem BUS bzw. LES und übergeordnetem LES führt außerdem zu Zeitverzögerungen.

Aufgabe der Erfindung ist das Bereitstellen eines Verfahrens zum Übermitteln von Informationspaketen zwischen einem Ursprungs-LEC eines ersten ELAN und einem Ziel-LEC eines zweiten ELAN.

Diese Aufgabe wird gelöst durch ein Verfahren mit den Merkmalen des Anspruchs 1. Günstige Ausgestaltungen sind Gegenstand von Unteransprüchen.

Wenn innerhalb eines ELAN Information von einem LAN-Emulation-Client zu einem anderen LAN-Emulation-Client übertragen werden soll, veranlaßt der Ursprungs-LEC üblicherweise einen ATM-Verbindungsaufbau zu dem Ziel-LEC. Hierzu ist die Ziel-ATM-Adresse erforderlich. Der Ursprungs-LEC kennt von höheren Schichten eine Ziel-MAC-Adresse. Außerdem kann in seinem Speicher zu der Ziel-MAC-Adresse eine Ziel-ATM-Adresse abgelegt sein. Falls keine Ziel-ATM-Adresse abgelegt ist, gibt der Ursprungs-LEC normgemäß an einen LAN-Emulation-Server des ELAN eine Adreßauflösungsanfrage LE_ARP_Request. Wenn der der Ziel-MAC-Adresse zugeordnete Client nicht zu dem ELAN dieses LAN-Emulation-Server gehört, kann dieser LAN-Emulation-Server die ATM-Adresse nicht auflösen, die Adreßauflösungsanfrage also nicht beantworten.

Erfindungsgemäß sind das erste und das zweite ELAN an ein einen verbindungslosen Dienst wie z.B. SMDS (Switched Multimegabit Data Service) oder CBDS (Connectionless Broadband Data Service) bereitstellendes Weitverkehrsnetz (regional und/oder global) angeschlossen. Der Einfachheit halber wird im Folgenden und in den Patentansprüchen, sofern keine anderslautenden Erläuterungen vorgenommen werden unter Weitverkehrsnetz immer ein einen verbindungslosen Dienst bereitstellendes Weitverkehrsnetz - also ein CLS-Weitverkehrsnetz (regional und/oder global) - gemeint.

Ist die aufzulösende Ziel-MAC-Adresse mindestens einem LAN-Emulation-Client eines zweiten ELAN zugeordnet, so werden Informationspakete erfindungsgemäß nach dem folgenden Verfahren übertragen: Ermitteln der Ziel-ATM-Adresse durch Übertragung einer eine Verbindungsaufbauanfrageinformation enthaltenden Adreßauflösungsanfrage des Ursprungs-LEC über ein CLS-Weitverkehrsnetz zum zweiten ELAN; Übermitteln der Verbindungsaufbauanfrageinformation vom LES des zweiten ELAN an den Ziel-LEC; Veranlassen eines Verbindungsaufbaus zwischen Ursprungs-LEC und Ziel-LEC über ein dem ersten ELAN und dem zweiten ELAN übergeordnetes ATM-Netz durch den Ziel-LEC; und Übermitteln der Informationspakete über das übergeordnete ATM-Netz.

Die Übertragung einer eine Verbindungsaufbauanfrageinformation enthaltenden Adreßauflösungsanfrage des Ursprungs-LEC über ein einen CLS-Weitverkehrsnetz zum zweiten ELAN sowie die Adreß-Auflösung kann hierbei vorzugsweise erfolgen durch Einkapseln der im ersten ELAN als ELAN-Rahmen vorliegenden Adreßauflösungsanfrage in ein Rahmenformat des CLS-Weitverkehrsnetzes mit einer der Ziel-MAC-Adresse zugeordneten E-164-Adresse im Rahmen-Kopfteil; Übergeben dieser eingekapselten Adreßauflösungsanfrage an das CLS-Weitverkehrsnetz und Übertragung zum zweiten ELAN; Entkapseln der eingekapselten Adreßauflösungsanfrage und Übergeben an einen LAN-Emulation-Server des zweiten ELAN im ELAN-Rahmenformat und; Übermitteln der Verbindungsaufbauanfrageinformation vom LES des zweiten ELAN an den Ziel-LEC.

Ist der Ziel-MAC-Adresse ein einziger Ziel-LEC zugeordnet, also die Übertragung von Unicast-Rahmen beabsichtigt, so wird gemäß der oben erwähnten 'LAN-Emulation over ATM-Specification' vom Ursprungs-LEC eine Adreßauflösungsanfrage an den LAN-Emulation-Server des lokalen ELAN gesendet. Da der LAN-Emulation-Server nur die lokalen ATM-Adressen kennt, kann er die Ziel-ATM-Adresse nicht auflösen. Der lokale LAN-Emulation-Server gibt daher die Adreßauflösungsanfrage des Ursprungs-LEC an alle im lokalen ELAN angemeldeten Proxy-LEC ab. In einer günstigen Ausgestaltung der Erfindung sind daher die einzelnen ELANs jeweils über einen speziellen LAN-Emulation-Client an das CLS-Weitverkehrsnetz angeschlossen. Dieser Zugangs-LEC ist jeweils vorzugsweise als Proxy-LEC in seinem ELAN angemeldet.

Ist der Ziel-MAC-Adresse ein einziger Ziel-LEC zugeordnet, so ist der für den Unicast-Adreßtyp zuständige Server des LAN-Emulation-Services, dem die Adreßauflösungsanfrage übergeben wird, der in der oben genannten Spezifikation so genannte LAN-Emulation-Server LES.

Sind einer Ziel-MAC-Adresse einer Adreßauflösungsanfrage mehrere Ziel-LECs zugeordnet, handelt es sich also um eine Gruppen-MAC-Adresse, so kann in einer Ausführungsform der Erfindung die Adreßauflösungsanfrage an den lokalen Broadcast-and-Unknown-Server abgegeben werden. Hierbei ist zu sagen, daß eine Adreßauflösungsanfrage für eine Gruppen-MAC-Adresse in der derzeitigen ELAN-Spezifikation nicht vorgesehen ist.

Ist die aufzulösende Ziel-MAC-Adresse mindestens einem LAN-Emulation-Client eines zweiten ELAN zugeordnet, so wird die Adreßauflösungsanfrage erfindungsgemäß über das einen verbindungslosen Dienst bereitstellende Weitverkehrsnetz an das zweite und ggf. weitere ferne ELANs übertragen.

Sind die einzelnen ELANs jeweils über einen Zugangs-LEC an das einen verbindungslosen Dienst bereitstellende Netz angeschlossen, so wird der Übergang zwischen einem ELAN und dem CLS-Weitverkehrsnetz vorzugsweise durch eine Übergangsfunktion IWF (Inter Working Function) gebildet, die zwischen dem CLS-Weitverkehrsnetz (T-Referenzpunkt) und einem Zugangs-LEC des jeweiligen ELAN angeordnet ist. Eine solche Übergangsfunktion kann eine Brücke (Bridge) oder ein Router sein.

Eine Brücke als Übergangsfunktion hat beispielsweise einen Adress-Speicher für einander zugeordnete MAC-Adressen des ELAN und E.164-Adressen des CLS-Weitverkehrsnetzes und einen Speicher für eine dem Übergang vom CLS-Weitverkehrsnetz zur Brücke zugeordnete E.164-Adresse.

Eine einfache Ausführungsform einer solchen Brücke kann vorsehen, daß Adreßauflösungsanfrage-Rahmen und Unicast- sowie Multicast-Daten-Rahmen verworfen werden, falls zu ihrer Ziel-MAC-Adresse im Adress-Speicher keine zugeordnete E.164-Adresse gespeichert ist, daß Adreßauflösungsanfrage-Rahmen und Unicast- sowie Multicast-Daten-Rahmen an das CLS-Weitverkehrsnetz weitergeleitet werden, falls zu ihrer Ziel-MAC-Adresse im Adreß-Speicher eine zugeordnete E.164-Adresse gespeichert ist, und daß Datenrahmen und Adreßauflösungsanfrage-Rahmen, deren Ziel-MAC-Adresse eine lokale Broadcast-MAC-Adresse ist, verworfen werden. Die Umsetzungsfunktion übergibt jeweils gemeinsam mit dem Rahmen die der Ziel-MAC-Adresse zugehörige E.164-Adresse an die Schnittstelle zum CLS-Weitverkehrsnetz. Zumindest zu Adreßauflösungsanfrage-Rahmen übergibt die Umsetzungsfunktion auch die der Ursprungs-MAC-Adresse zugeordnete E.164-Adresse.

Vom CLS-Weitverkehrsnetz kommende Rahmen werden an die Schnittstelle (Schicht LEC) zum ELAN übergeben.

Eine noch einfachere Ausführungsform einer solchen Brücke kann vorsehen, daß Unicast- und Multicast-Daten-Rahmen sowie Adreßauflösungsanfrage-Rahmen, zu deren Ziel-MAC-Adresse im Adress-Speicher keine zugeordnete E.164-Adresse gespeichert ist, verworfen werden und daß Adreßauflösungsanfrage-Rahmen an das CLS-Weitverkehrsnetz weitergeleitet werden, falls zu ihrer Ziel-MAC-Adresse im Adreß-Speicher eine zugeordnete E.164-Adresse gespeichert ist.

Umsetzungsfunktionen nach Art der beiden zuvor genannten Ausführungsformen sehen vor, daß nur Adreßauflösungsanfragen für solche MAC-Adressen aufgelöst werden können, die gemeinsam mit der zugeordneten E.164-Adresse im Adresspeicher abgelegt sind. Dadurch gelangen nur sicher aufzulösende Adreßauflösungsanfragen in das einen verbindungslosen Dienst bereitstellende Weitverkehrsnetz.

Sollten auch Adreßauflösungsanfragen für solche MAC-Adressen aufgelöst werden können, deren zugeordnete E.164-Adressen nicht im Adresspeicher abgelegt sind, so kann die genannte Umsetzungsfunktion ausgestaltet sein, um Adreßauflösungsanfrage-Rahmen, zu deren Ziel-MAC-Adresse im Adress-Speicher keine zugeordnete E.164-Adresse gespeichert ist, mit einer allen ELANs zugeordneten E.164-Adresse (globale E.164-Gruppenadresse) an das CLS-Weitverkehrsnetz weiterzuleiten. Eine solche Adreßauflösungsanfrage wird dann, beispielsweise vom Gruppenadressen-Agenten GAA des CLS-Weitverkehrsnetzes gesteuert, an alle ELANs geschickt. Da die Adreßauflösungsanfrage-Rahmen klein sind, wird durch diese Maßnahme das CLS-Weitverkehrsnetz nur relativ gering belastet.

Insbesondere um das Versenden von Unicast-Datenrahmen im CLS-Weitverkehrsnetz zu verhindern, deren ATM-Adresse dem Ursprungs-LEC beim Absenden nicht bekannt war und die daher über den Broadcast-and-Unknown-Server als Unknown-Datenrahmen zum Zugangs-LEC gelangen, kann in einer Abwandlung der als erste einfache Ausführungsform beschriebenen Umsetzungsfunktion vorgesehen sein, alle Unicast-Datenrahmen zu verwerfen. Da der solchen Unicast-Datenrahmen ohne ATM-Adresse zugeordnete Adreßauflösungsanfrage-Rahmen über das CLS-Weitverkehrsnetz übertragen wird, erhält der Ziel-LEC die Adreßauflösungsanfrage mit der Aufforderung zum Verbindungsaufbau und kann den Verbindungsaufbau veranlassen. Wenn von einem Sicherungsmechanismus einer höheren Schicht festgestellt wird, daß eine fehlerhafte Übertragung zumindest der Unkwown-Datenrahmen vorliegt, kann eine wiederholte Übertragung über die aufgebaute ATM-Verbindung erfolgen.

Eine beschriebene Umsetzungsfunktion kann vorzugsweise ausgestaltet sein, um Datenrahmen und AdreßauflösungsanfrageRahmen an das CLS-Weitverkehrsnetz weiterzuleiten, deren Ziel-MAC-Adresse eine globale Broadcast-MAC-Adresse ist. Die hierzu zugeordnete E.164-Adresse entspricht der oben erwähnten, alle angeschlossenen ELANs adressierenden E.164-Adresse. Durch diese Maßnahme ist es möglich, gezielt Broadcast-Rahmen über das CLS-Weitverkehrsnetz zu übertragen, obwohl lokale Broadcast-Rahmen verworfen werden.

Vorzugsweise ist bei beschriebenen Umsetzungsfunktionen vorgesehen, jeweils die dem Sender von vom CLS-Weitverkehrsnetz kommenden Rahmen zugeordnete MAC-Adresse sowie die dieser zugeordnete E.164-Adresse im Adreß-Speicher zu speichern. Dadurch wird das gezielte Übertragen von Daten - beispielsweise einer Antwort - vom Empfänger einer Information - beispielsweise einer Adreßauflösungsanfrage - zum Sender dieser Information über das einen verbindungslosen Dienst bereitstellende Weitverkehrsnetz erleichtert.

Nachfolgend wird die Erfindung an Hand besonderer Ausgestaltungen unter Bezugnahme auf die Figuren näher erläutert:
- Fig. 1: zeigt die Übertragung von SETUP bzw. ADD_PARTY Signalisierungs-nachricht mit LE_ARP Request und ATM-Verbindungsaufbau vom Empfänger zum Sender.
- Fig. 2: zeigt die Übertragung der SETUP bzw. ADD_PARTY Signalisierungs-nachricht mit LE_ARP Request für Multicast/Broadcast-MAC-Adresse und Aufbau von Punkt-zu-Punkt/Punkt-zu-Mehrpunkt ATM-Verbindungen von allen Empfängern zum Sender.
- Fig. 3A bis 3C: zeigen jeweils einen Protokollstack bei Kopplung von ELANs durch SMDS-Netz bzw CBDS-Netz.

Der Connectionless Service oder CLS-Dienst kann mit verschiedenen Technologien (z.B. DQDB, ATM, FR) realisiert werden. Der Dienst wird in der ITU-T Empfehlung F.812 beschrieben.

Bekannte Realisierungen sind der Switched Multi-megabit Data Service (SMDS), beschrieben in Spezifikationen von Bellcore, SMDS Interest Group (SIG) und European SMDS Interest Group (ESIG), sowie der Connectionless Broadband Data Service (CBDS), definiert in ETSI Standard 300 217 und ITU-T Empfehlung I.364.
Durch diese Realisierungen fand der CLS weltweit große Verbreitung. Anlagen, die diesen Dienst anbieten, werden von vielen Herstellern im Bereich der Telekommunikation gebaut.

Der Dienst ist für weltweite Datenkommunikation gedacht. Dabei werden jedem Zugang zum CLS-Netz eine oder mehrere CLNAP-Adressen nach E.164 ( E.164-Adresse) zugeteilt (CLNAP=Connectionless Network Access Protocol).

Einem ankommenden Unicast-Rahmen wird anhand seiner Ziel-MAC-Adresse durch statische oder dynamische Zuordnungstabellen eine Ziel-CLNAP-Adresse ( E.164-Adresse) zugefügt (Einkapseln) und der eingekapselte Rahmen (auch CLS-Paket genannt) wird zu dieser CLNAP-Adresse geleitet.

Zum besseren Verständnis werden im folgenden die Adressen im ELAN Unicast- bzw. Multicast/Broadcast-MAC-Adressen genannt, im CLS-Netz wird dagegen von individuellen und Gruppenadressen gesprochen.

Jedes CLS-Paket wird im CLS-Netz unabhängig von den anderen übertragen. Das Netz sorgt für die richtige Reihenfolge der CLS-Pakete.

Innerhalb des CLS-Netzes werden unter bestimmten Voraussetzungen (siehe prETS 300 478, 300 479) die CLNAP-PDUs in CLNIP-PDUs (CLNIP = Connectionless Network Interface Protocol) eingekapselt.

Die Behandlung von Multicast-Verkehr wird im CLS-Netz in folgender Weise realisiert. Sogenannte Group Address Agents (GAAs) enthalten Tabellen mit den individuellen CLNAP-Adressen, die zu einer CLNAP-Gruppenadresse gehören. Jedes CLS-Paket, das eine Gruppenadresse als Zieladresse hat, wird zum-entsprechenden Group Address Agent geleitet. Falls eingekapselt wurde, steht in den Feldern "CLNAP Destination Address" und "CLNIP Destination Address" die gleiche Gruppenadresse.

Der GAA löst die Gruppenadresse des angekommenen CLS-Pakets in individuelle CLNIP-Adressen auf, erzeugt Kopien des ursprünglichen Pakets und fügt jeder Kopie die entsprechende individuelle Adresse als CLNIP-Adresse hinzu.

Das "CLNAP Destination Address" Feld bleibt unverändert, damit der Empfänger die ursprüngliche Gruppenadresse erfahren kann. Die LAN-Emulation beschreibt ein einzelnes emuliertes LAN. Für die Kopplung von ELANs sind zur Zeit keine Lösungen bekannt. Aus Leistungsgründen können die in der LAN-Emulation beschriebenen Mechanismen zur Adressenauflösung und zur Realisierung von Multicast/Broadcast im WAN Bereich nicht einfach übernommen werden.

Nachstehend werden Methoden zur Kopplung von ELANs unter Anwendung der Erfindung beschrieben:

Ein erstes Beispiel sieht die Übertragung von Adreßauflösungsanfragen bzw. Adreßauflösungsantworten LE_ARP Request/Response durch ein einen verbindungslosen Dienst bereitstellendes Netz und das unmittelbare Veranlassen eines Verbindungsaufbaus einer ATM-Verbindung zwischen Empfänger und Sender durch den Empfänger für den Fall eines einzigen Empfängers vor.

Ein Vorteil der LAN-Emulation ist der Aufbau einer direkten ATM-Verbindung zwischen Sender und Empfänger, wie er in der LAN-Emulation Specification mit "Data Direct VCC" bezeichnet wird. Deshalb schlägt die Weiterbildung der Erfindung dieses Beispiels vor, die Ziel-MAC-Adresse für den Unicast-Verkehr unter Verwendung eines einen verbindungslosen Dienst bereitstellenden Netzes wie z.B. SMDS oder CBDS in die ATM-Adresse aufzulösen und dann eine direkte ATM-Verbindung zum Ziel aufzubauen.

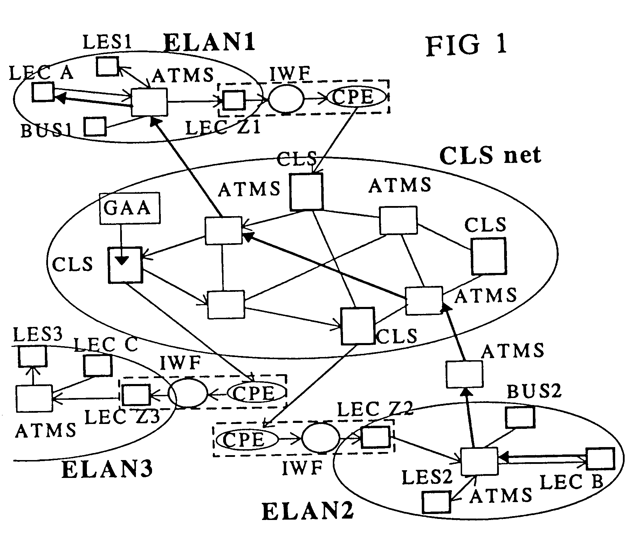

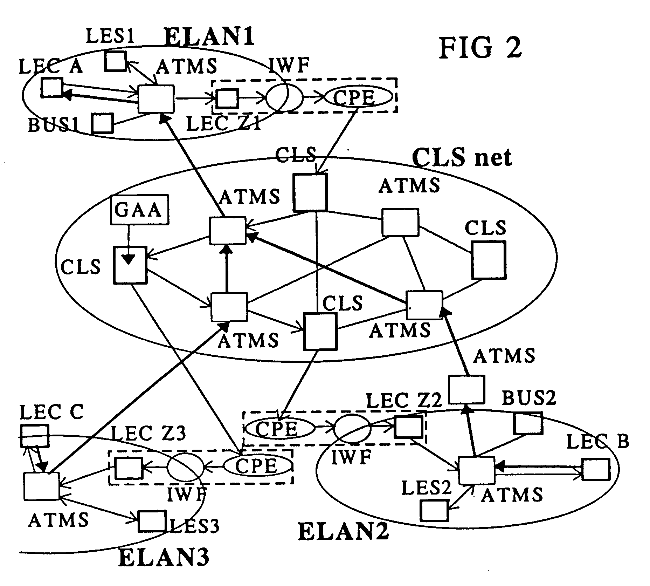

Die Figuren 1 und 2 zeigen in gleicher Weise drei ELANs ELAN1, ELAN2 und ELAN3, jeweils mit einem LAN-Emulation-Server LES, einer ATM-Vermittlungseinrichtung ATMS, einem LAN-Emulation-Client LEC A, LEC B, LEC C und einem speziellen LAN-Emulation-Client LEC Z1, LEC Z2, LEC Z3, der nachstehend als Zugangs-LEC bezeichnet wird und der dem jeweiligen ELAN ELAN1, ELAN2 bzw. ELAN3 über eine Kundenanschlußeinheit CPE (Customer Premises Equipment) Zugang zu einem ebenfalls dargestellten, einen verbindungslosen Dienst bereitstellenden Netz CLSnet ermöglicht. Hierbei ist jeder Kundenanschlußeinheit CPE eine Übergangsfunktion (Interworking Function IWF) zugeordnet zum Umsetzen einer Ziel-MAC-Adresse in eine E.164-Adresse der Kundenanschlußeinrichtung CPE des ELAN, in dem der LAN-Emulation-Client sich befindet, dem die Ziel-MAC-Adresse zugeordnet ist, oder zum Umsetzen einer E.164-Gruppenadresse aller ELANs. In den Ausführungsbeispielen gemäß den Figuren 1 und 2 ist das einen verbindungslosen Dienst bereitstellende Netz CLSnet mit Hilfe eines übergeordneten (räumlich übergeordnet, also regional oder global) ATM-Netzes mit ATM-Vermittlungseinrichtungen ATMS realisiert. Die Realisierungsart des einen verbindungslosen Dienst bereitstellenden Netzes CLSnet hat jedoch keinen Einfluß auf die Erfindung.

In der Figur 1 sind außerdem jeweils der Broadcast-and-Unknown-Server BUS1, BUS2, BUS3 des ELAN1, ELAN2 und ELAN3 dargestellt. Wie durch einen übergreifenden Rahmen dargestellt, bilden in dem dargestellten Beispiel jeweils Zugangs-LEC, Umsetzungsfunktion IWF und Kundenanschlußeinrichtung CPE eine Brücke, deren Brückenfunktion die Umsetzungsfunktion IWF ist.

Das einen verbindungslosen Dienst bereitstellende Netz CLSnet enthält einen verbindungslosen Dienst bereitstellende Server (Connectionless Server) CLS und einen Gruppenadreßagenten GAA (Group-Address-Agent).

In Fig. 1 sind die Signalflüsse der im Rahmen des LAN-Emulation-Adreßauflösungsprotokolls LE_ARP (LAN Emulation Address Resolution Protocol) übermittelten Adreßauflösungsanfragen LE_ARP Request durch eine dünne Linie mit Pfeil in Signalflußrichtung angedeutet. Der ATM-Verbindungsaufbau vom LAN-Emulation-Client LEC B zum LAN-Emulation-Client LEC A ist in Fig. 1 durch eine fette Linie mit Pfeil in Richtung des Verbindungsaufbaus angedeutet.

Demnach ist in Fig. 1 zu erkennen, daß eine Adreßauflösungsanfrage LE_ARP Request mit einer Verbindungsaufbauanfrageinformation wie z.B. SETUP oder. ADD_PARTY, vom LAN-Emulation-Client LEC A des ELAN1 über die ATM-Vermittlungseinrichtung ATMS dieses ELAN1 an den LAN-Emulation-Server des ELAN1 und von dort über die ATM-Vermittlungseinrichtung ATMS an den Zugangs-LEC LEC Z1 übertragen wird. Vom Zugangs-LEC LEC Z1 geht die Adreßauflösungsanfrage LE_ARP Request unter Einbeziehung der Umsetzungsfunktion IWF zur Kundenanschlußeinrichtung CPE, wird dort in eine andere Form umgesetzt und über einen verbindungslosen Server CLS, eine ATM-Vermittlungseinrichtung ATMS und einen weiteren verbindungslosen Server CLS zum Gruppenadressenagenten GAA übertragen und von dort unmittelbar an die Kundenanschlußeinrichtung CPE des ELAN3 sowie über eine weitere ATM-Vermittlungseinrichtung ATMS und einen weiteren verbindungslosen Server CLS an die Kundenanschlußeinrichtung CPE des ELAN2 übermittelt. Dann wird die Adreßauflösungsanfrage LE_ARP Request in jedem der ELANs ELAN2 und ELAN3 über einen Zugangs-LEC LEC Z2, LEC Z3 und die ATM-Vermittlungseinrichtung ATMS des ELAN an den LAN-Emulation-Server LES des ELAN übertragen. Der LAN-Emulation-Server LES2 des ELAN2 kennt die Ziel-MAC-Adresse und kann die Adreßauflösungsanfrage LE_ARP Request, mindestens aber die darin enthaltene Verbindungsaufbauanfrageinformation über die ATM-Vermittlungseinrichtung ATMS an den Ziel-LEC LEC B übermitteln.

Ein schneller Verbindungaufbau zwischen Sender und Empfänger wird erfindungsgemäß erreicht, weil die SETUP bzw. ADD_PARTY Signalisierungsnachricht mit dem LE_ARP Request mitgesendet wird. Dadurch kann der Empfänger gleich nach der Ankunft der Adreßauflösungsanfrage LE_ARP Requests den Aufbau einer ATM-Verbindung zum Sender durch CALL_SETUP invoke bzw. CALL_ADD_PARTY invoke (siehe Punkt 3.3.2 in der LAN Emulation Specification) an die Signalisierungseinheit veranlassen. Signalisierungseinheit ist hierbei die in der LAN Emulation Specification mit Connection Management bezeichnete Einheit.

Nachstehend wird dieser Ablauf detaillierter beschrieben.

Ein LAN-Emulation-Client LEC Z1, LEC Z2 bzw. LEC Z3 jedes emulierten LAN ELAN1, ELAN2, ELAN3 hat Zugang (CPE) zum einen verbindungslosen Dienst bereitstellenden Netz CLSnet. Falls der LAN-Emulation-Client LEC A des ELAN1 einen Unicast-Rahmen an den LAN-Emulation-Clienten LEC B des ELAN2 senden möchte, jedoch die Ziel-ATM-Adresse nicht kennt, schickt er eine Adreßauflösungsanfrage LE_ARP Request an den LAN-Emulation-Server LES des ELAN1. Wenn der LAN-Emulation-Server LES des ELAN1 keinen Eintrag für die Ziel-MAC-Adresse in seiner Tabelle hat, muß er diese Adreßauflösungsanfrage LE_ARP Request an den Zugangs-LEC LEC Z1 des ELAN1 weitergeben. Dies kann beispielsweise durch Anmeldung des Zugangs-LEC LEC Z1 als Proxy beim LAN-Emulation-Server LES des ELAN1 realisiert sein.

Der Zugangs-LEC LEC Z1 des ELAN1 ist wie die übrigen Zugangs-LECs LEC Z2, LEC Z3 der anderen emulierten ELANs ELAN2 und ELAN3 jeweils an eine Kundenanschlußeinrichtung CPE eines einen verbindungslosen Dienst bereitstellenden Netzes CLSnet angeschlossen. Der Übergang vom Zugangs-LEC LEC Z1, LEC Z2, LEC Z3 zum einen verbindungslosen Dienst bereitstellenden Netz CLSnet wird hierbei mit Hilfe einer oben erwähnten und weiter unten detaillierter beschriebenen Übergangsfunktion IWF (Interworking Function) realisiert, die jede zu einem Zugangs-LEC LEC Z1, LEC Z2, LEC Z3 ankommende Adreßauflösungsanfrage LE_ARP Request, für die sie einen Eintrag (E.164-Adresse) für die Ziel-MAC-Adresse hat, in das Format eines Paketes des einen verbindungslosen Dienst bereitstellenden Netzes CLSnet (CLNAP-Paket) transformiert und diese Anfrage bzw. Antwort an das einen verbindungslosen Dienst bereitstellende Netz CLSnet übergibt.

Falls die Übergangsfunktion keinen Eintrag hat, kann sie entweder den entsprechenden Adreßauflösungsanfragerahmen verwerfen oder (alternativ, fest vorzusehen) diesen Rahmen mit einer E.164-Gruppenadresse versehen, durch die alle emulierten LANs erreichbar sind, die einen Zugang zum einen verbindungslosen Dienst bereitstellenden Netz CLSnet haben. Im letztgenannten Fall löst ein Gruppenadressenagent GAA (Group-Address-Agent) diese Gruppenadresse in die individuellen E.164-Adressen der einzelnen Kundenanschlußeinrichtungen CPE der einzelnen ELANs ELAN1, ELAN2, ELAN3 auf.

Hierbei ist es besonders günstig, wenn die E.164-Gruppenadresse, die von einer Übergangsfunktion zu einer Adreßauflösungsanfrage hinzugefügt wird, jeweils die E.164-Adressen der Kundenanschlußeinrichtungen CPE aller emulierten LANs ELAN2, ELAN3 enthält, die an das einen verbindungslosen Dienst bereitstellende Netz CLSnet angeschlossen sind.

Der Gruppenadressenagent GAA löst die E.164-Gruppenadresse auf und schickt Kopien des Paketes mit der Adreßauflösungsanfrage LE_ARP Request an die genannte Gruppe der Kundenanschlußeinrichtungen CPE der einzelnen ELANs ELAN2, ELAN3. Dadurch erhalten alle Zugangs-LECs LEC Z2, LEC Z3 die Adreßauflösungsanfrage LE_ARP Request über die Übergangsfunktion.

Jeder Zugangs-LEC LEC Z2, LEC Z3 erkennt den Rahmentyp als Adreßauflösungsanfrage und schickt den Rahmen daher (bei nach heutigem Standart vorgesehenen Unicast-Adressen) an den LAN-Emulation-Server LES seines emulierten LAN ELAN2 bzw. ELAN3. Üblicherweise kennt irgendein LAN-Emulation-Server LES die Unicast-Ziel-MAC-Adresse des Ziel-LAN-Emulation-Clienten LEC B. Die Adressauflösungsanfrage oder zumindest die mit dieser übermittelte Verbindungsaufbauaufforderung wird dann dem Ziel-LEC LEC B übermittelt.

Nachdem der Ziel-LEC LEC B die Adreßauflösungsanfrage LE_ARP Request mit der Verbindungsaufbauanfrageinformation wie z.B. SETUP oder. ADD_PARTYLE_ARP Response sowie der Ursprungs-ATM-Adresse erhalten hat, veranlaßt er eine unmittelbare ATM-Verbindung zwischen Ursprungs-LEC LEC A und Ziel-LEC LEC B über ein regionales bzw. globales ATM-Netz.

Zur Realisierung des beschriebenen Verfahrens zum Koppeln von ELANs sind in der bestehenden LAN-Emulation Specification keine großen Änderungen erforderlich. Es muß jeweils ein Zugangs-LEC als Proxy beim LAN-Emulation-Server LES angemeldet werden und über eine Kundenanschlußeinrichtung CPE an ein einen verbindungslosen Dienst bereitstellendes Netz CLSnet angeschlossen sein. Dieser Zugangs-LEC erhält dann alle unbeantworteten Adreßauflösungsanfragen LE_ARP Requests von dem LAN-Emulation-Server LES des entsprechenden emulierten LANs ELAN1, ELAN2, ELAN3.

Um einen ATM-Verbindungsaufbau vom Ziel-LEC LEC B zum Ursprungs-LEC LEC A zu veranlassen, muß das Format der Adreßauflösungsanfrage LE_ARP Request geändert werden, so daß eine Verbindungsaufbauanforderung zum Veranlassen eines Verbindungsaufbaus wie z.B. SETUP oder ADD_PARTY mitgesendet werden kann. Die Adreßauflösungsantwort LE_ARP Response wird für Weitverkehrsverbindungen zwischen verschiedenen ELANs gemäß dem Beispiel der Figur 1 nicht benötigt. Eine weitere Anderung in der LAN-Emulation Specification muß vorsehen, daß der LAN-Emulation-Server LES des Ziel-ELANs ELAN2, der die Ziel-MAC-Adresse auflösen kann, die Adreßauflösungsanfrage LE_ARP Request zum Ziel-LEC LEC B überträgt.

Die bestehenden, einen verbindungslosen Dienst bereitstellenden Netze wie z.B. SMDS oder CBDS müssen weder in ihren Standards noch in ihren Spezifikationen geändert werden. Es sollte jedoch innerhalb dieses Netzes eine E.164-Gruppenadresse mit allen individuellen CPE-Adressen definiert werden, durch die emulierten LANs erreicht werden können. Hierbei kann ggf. ein Mechanismus vorgesehen sein, der eine Adressierung der sendenden Kundenanschlußeinheit CPE ausschließt.

Ein zweites, anhand von Figur 2 nachstehend näher erläutertes Beispiel eines Verbindungsaufbaus sieht die Übertragung der Adressenauflösungsanfrage einer Multicast/Broadcast-Ziel-MAC-Adresse durch das CLS-Netz und den Aufbau von Punkt-zu-Punkt bzw. Punkt-zu-Mehrpunkt ATM-Verbindungen von mehreren Empfängern zum Sender vor. Hierbei ist ebenfalls die Übertragung einer einen Verbindungsaufbau anfordernden Meldung, wie zum Beispiel eine SETUP- oder ADD_PARTY-Signalisierungsnachricht, gemeinsam mit der Adreßauflösungsanfrage LE_ARP Request für eine Multicast/Broadcast-Ziel-MAC-Adresse vorgesehen und das unmittelbare Veranlassen eines Punkt-zu-Punkt bzw. Punkt-zu-Mehrpunkt-Verbindungsaufbaus einer ATM-Verbindung zwischen den Empfängern und dem Sender durch die Empfänger.

Die Fig. 2 zeigt dieselbe Netzkonfiguration wie die Fig. 1. Der Signalfluß der Adreßauflösungsanfrage LE_ARP Request erfolgt in gleicher Weise, wie in Zusammenhang mit Fig. 1 beschrieben. Da jedoch die Adreßauflösungsanfrage eine Gruppenadresse betrifft, deren Gruppenmitglieder die LAN-Emulation-Clienten LEC B und LEC C in den ELANs ELAN2 und ELAN3 sind, wird nicht nur, wie im anhand von Fig. 1 beschriebenen Beispiel vom LAN-Emulation-Server LES2 des ELAN2 eine Adreßauflösungsanfrage an den LEC LECB geschickt, sondern auch vom LES3 an den LECC des ELAN3. Nach dem Zustellen der Adreßauflösungsanfrage an die einzelnen LES LES2 und LES3 wird jeweils die eine Verbindungsaufbauanfrageinformation enthaltende Adressauflösungsanfrage an die den ATM-Zieladressen zuordenbaren Ziel-LEC LEC B und LEC C übermittelt und von diesen Ziel-LEC LEC B und LEC C ein Punkt-zu-Mehrpunkt-Verbindungsaufbau zwischen Ursprungs-LEC LEC A und den LAN-Emulation-Clienten LEC B und LEC C veranlaßt. Der Verlauf des Verbindungsaufbaus innerhalb des Netzes ist hierbei durch die fetten Vollinien mit Pfeilspitze in Richtung des Verbindungsaufbaus dargestellt.

Wie in den vorangehenden Beispielen wird auch zur Realisierung des anhand von Fig. 2 beschriebenen Beispiels jeweils der Zugang-LEC LEC Z1, LEC Z2, LEC Z3 als Proxy beim LAN-Emulation-Server LES1, LES2 bzw. LES3 seines ELAN ELAN1, ELAN2, ELAN3 angemeldet, um alle unbeantwortbaren Adreßauflösungsanfragen vom LAN-Emulation-Server LES zu bekommen.

Im Unterschied zum vorangegangenen Beispiel wird hier eine Multicast/Broadcast-Adressauflösungsanfrage gesendet. Die LAN Emulation Specification verbietet derzeit das Senden von LE_ARP Requests zur Auflösung von Multicast-MAC-Adressen. Diese Beschränkung müßte aufgehoben werden.

Der LE_ARP Request für die Broadcast-MAC-Adresse 48 x "1", also 48 mal die Ziffer "1", liefert die ATM-Adresse vom lokalen Broadcast-and-Unknown-Server BUS. Es sollte vorzugsweise zusätzlich eine globale Broadcast-MAC-Adresse definiert werden, durch die alle LAN-Emulation-Clienten von allen ELANs, die am CLS-Netz hängen, angesprochen werden können.

Die Umsetzungsfunktion IWF gibt im beschriebenen Beispiel nur die Broadcast-Rahmen an das CLS-Netz weiter, die die globale Broadcast-MAC-Adresse enthalten, um unbeabsichtigte weltweite Broadcast-Stürme zu vermeiden.

Nach dem heutigen Standard für die Signalisierung können keine Punkt-zu-Mehrpunkt ATM-Verbindungen rückwärts aufgebaut werden. Nur Punkt-zu-Punkt ATM-Verbindungen vom Empfänger zum Sender sind möglich. Für die Realisierung dieser Methode muß daher die Signalisierung im ATM-Netz erweitert werden.

Nachstehend wird allgemein zur Umsetzungsfunktion (Interworking Function) IWF Stellung genommen:

Die IWF realisiert die Verbindung zwischen dem "Zugang LEC" einerseits und dem CLS-Netz andererseits.
Die IWF zur Kopplung von ELANs durch das CLS-Netz behandelt MAC- und E.164-Adressen und ist der Schicht 2 nach OSI-Referenzmodell zuzuordnen. Das heißt die IWF ist eine ELAN-CLS Brücke.

Wenn die IWF auch Routing Funktionen erfüllen soll, kann sie auch Schicht 3 Adressen (z.B. IP, IPX u.s.w.) behandeln. Das ist aber für die Realisierung erfindungsgemäßer Verfahren nicht erforderlich.

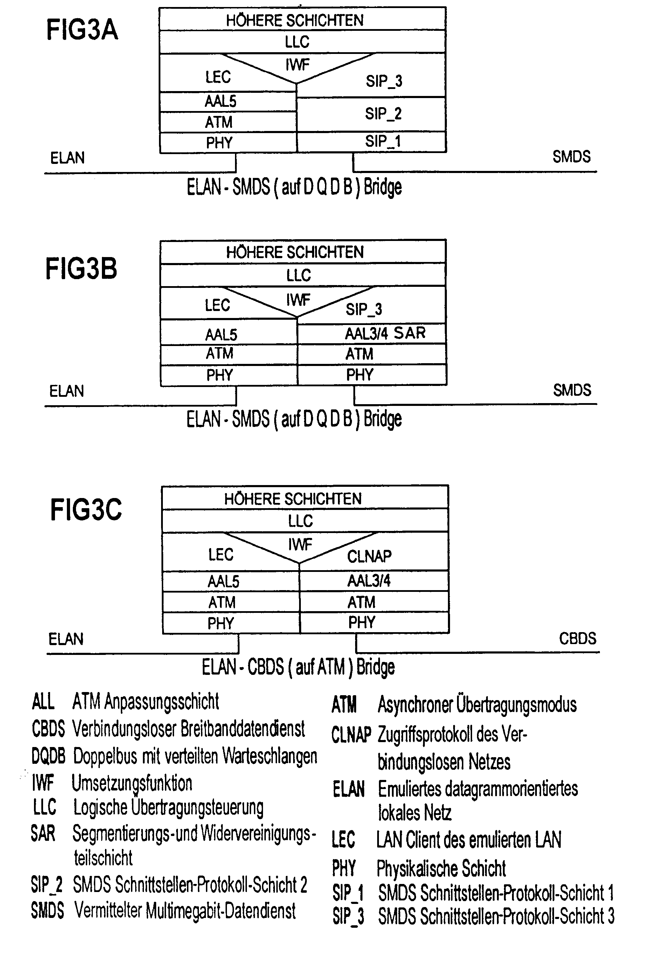

Im Beispiel in Figur 3A, 3B und 3C wird jeweils der Protokollstack für Kopplung von ELANs durch das SMDS-Netz bzw. durch das CBDS-Netz dargestellt. Der SMDS-Dienst wird in dem Beispiel nach Figur 3A mit der DQDB-Technologie und im Beispiel nach Figur 3B mit der ATM-Technologie realisiert. Der CBDS-Dienst wird in dem Beispiel nach Figur 3C mit der ATM-Technologie realisiert.

Die IWF hat beispielsweise die folgenden Aufgaben:
I. Bereitstellung der folgenden Parameter:
I.1. Empfänger-E.164-Adresse
   Die IWF muß hierzu eine Tabelle mit MAC-Adressen und den entsprechenden E.164-Adressen unterhalten. Die Einträge in der Tabelle werden beispielsweise per Netzmanagement eingestellt, können aber auch anhand der Sender-MAC-Adresse und Sender-E.164-Adresse der angekommenen CLS-Pakete ausgefüllt werden und nach einer bestimmten Zeit gelöscht werden.
I.2. Sender-E.164-Adresse
   Das ist die E.164-Adresse der IWF.

II. Behandlung der Rahmen entsprechend der Ziel-MAC-Adresse:
II.1. Unicast/Multicast-Daten-Rahmen für die kein Eintrag vorhanden ist, werden weggeworfen.
II.2. Unicast/Multicast-Daten-Rahmen, für die ein Eintrag vorhanden ist, werden an das CLS-Netz geleitet.
II.3. Unicast/Multicast LE_ARP Requests/Responses, für die kein Eintrag vorhanden ist, werden entweder verworfen, oder mit einer globalen E.164-Gruppenadresse versehen und an das CLS-Netz geleitet.
II.4. Unicast/Multicast LE_ARP Requests/Responses, für die ein Eintrag vorhanden ist, werden an das CLS-Netz übergeben.
II.5. Rahmen mit lokaler Broadcast-MAC-Adresse (Daten und LE_ARP Requests) werden weggeworfen.
II.6. Rahmen mit globaler Broadcast-MAC-Adresse (Daten und LE_ARP Requests) werden mit der globalen E.164-Broadcast-Gruppenadresse versehen und an das CLS-Netz geleitet.

Für die Realisierung der vorliegenden Erfindung ist nur die Übertragung von Adressauflösungsanfragen über das CLS-Weitverkehrsnetz wesentlich. Die Behandlung von Datenrahmen oder Adressauflösungsantwort-Rahmen ist nicht wesentlich.

Ein erstes Realisierungsbeispiel für die Einbindung einer vorstehend beschriebene Umsetzungsfunktion zwischen einem ELAN und einem einen verbindungslosen Dienst bereitstellenden Weitverkehrsnetz für den Fall, daß der verbindungslose Dienst ein "Switched Multi-megabit Data Service" SMDS ist, und daß das Weitverkehrsnetz zur Realisierung dieses Dienstes ein "Distributed Queue Dual Bus" DQDB ist, kann vorsehen, daß weitverkehrsnetzseitig die Protokollschichten
- SMDS-Schnittstellenprotokollschicht 1, SIP_1,
- SMDS-Schnittstellenprotokollschicht 2, SIP_2, und
- SMDS-Schnittstellenprotokollschicht 3, SIP_3, vorgesehen sind und daß die Umsetzungsfunktion weitverkehrsnetzseitig mit der SMDS-Schnittstellenprotokollschicht 3, SIP_3, kommuniziert.

Hierbei können beispielsweise ELAN-seitig die Protokollschichten
- Physikalische Schicht, PHY,
- Asynchron-Transfer-Modus-Schicht, ATM,
- Asynchron-Transfer-Modus-Anpassungsschicht-5, AAL5, und
- LAN-Emulation-Client-Schicht, LEC,
vorgesehen sein, wobei die Umsetzungsfunktion ELAN-seitig mit der LAN-Emulation-Client-Schicht, LEC, kommuniziert.

In einem anderen Beispiel kann der verbindungslose Dienst ein "Switched Multi-megabit Data Service" (SMDS) sein und das Weitverkehrsnetz zur Realisierung dieses Dienstes ein ATM-Netz, wobei weitverkehrsnetzseitig die Protolollschichten Physikalische Schicht, PHY, Asynchrone-Transfer-Modus-Schicht, ATM, Segmentations-und-Assemblierungs-Subschicht der Asynchron-Transfer-Modus-Anpassungsschicht-3/4, AAL3/4SAR, und SMDS-Schnittstellenprotokollschicht 3, SIP_3, vorgesehen sind und wobei die Umsetzungsfunktion weitverkehrsnetzseitig mit der SMDS-Schnittstellenprotokollschicht 3, SIP_3, kommuniziert.

In einem weiteren Beispiel kann der verbindungslose Dienst ein "Connectionless Broadband Data Service" CBDS sein und das Weitverkehrsnetz zur Realisierung dieses Dienstes ein ATM-Netz, wobei weitverkehrsnetzseitig die Protokollschichten
- Physikalische Schicht, PHY,
- Asynchron-Transfer-Modus-Schicht, ATM,
- Asynchron-Transfer-Modus-Anpassungsschicht-3/4, AAL3/4, und
- Verbindungsloses-Netz-Zugriffs-Protokollschicht, CLNAP,
vorgesehen sind und wobei die Umsetzungsfunktion weitverkehrsnetzseitig mit der Verbindungsloses-Netz-Zugriffs-Protokollschicht, CLNAP, kommuniziert.

Nachstehend werden die Bedeutungen der verwendeten Abkürzungen in Form der Fachbegriffe gemäß den einschlägigen Normen angegeben:
- AAL: ATM Adaptation Layer
- ATM: Asynchronous Transfer Mode
- BUS: Broadcast and Unknown Server
- CBDS: Connectionless Broadband Data Service
- CLNAP: Connectionless Network Access Protocol
- CLNIP: Connectionless Network Interface Protocol
- CLNP: Connectionless Network Protocol
- CLS: Connectionless Service/Server
- CPE: Customer Premises Equipment
- CRC: Cyclic Redundancy Check
- DQDB: Distributed Queue Dual Bus
- DS1: Digital Signal 1
- DS3: Digital Signal 3
- E1: European transmission level 1
- E3: European transmission level 3
- ELAN: Emulated Local Area Network
- ESIG: European SMDS Interest Group
- ETSI: European Telecommunications Standards Institute
- FR: Frame Relay
- GAA: Group-Address-Agent
- IEEE: Institute of Electrical and Electronics Engineers
- IP: Internet Protocol
- IPX: Internetwork Packet Exchange
- ITU-T: International Telecommunications Union-Telecommu
- nica: tions
- IWF: Interworking Function
- L3_PDU: Level 3 Protocol Data Unit
- LAN: Local Area Network
- LE_ARP: LAN Emulation Address Resolution Protocol
- LEC: LAN Emulation Client
- LECS: LAN Emulation Configuration Server
- LES: LAN Emulation Server
- LLC: Logical Link Control
- MAC: Media Access Control
- OSI: Open Systems Interconnection
- PDU: Protocol Data Unit
- PHY: Physical Layer
- SIG: SMDS Interest Group
- SIP_3: SMDS Interface Protocol Layer 3
- SMDS: Switched Multi-megabit Data Service
- SPX: Sequenced Packet Exchange
- TCP: Transmission Control Protocol
- TP: Transport Protocol
- UBR: Unspecified Bit Rate
- WAN: Wide Area Network

## Patentansprüche

1. Verfahren zum Übermitteln von Informationspaketen zwischen einem Ursprungs-LEC eines ersten ELAN und einem Ziel-LEC eines zweiten ELAN, mit den folgenden Verfahrensschritten:
- Übertragung einer eine Verbindungsaufbauanfrageinformation enthaltenden Adreßauflösungsanfrage des Ursprungs-LEC über ein einen verbindungslosen Dienst bereitstellendes Weitverkehrsnetz zum zweiten ELAN;
- Übermitteln der Verbindungsaufbauanfrageinformation innerhalb des zweiten ELAN an den Ziel-LEC;
- Veranlassen eines Verbindungsaufbaus zwischen Ursprungs-LEC und Ziel-LEC über ein dem ersten ELAN und dem zweiten ELAN übergeordnetes ATM-Netz durch den Ziel-LEC; und
- Übermitteln der Informationspakete über das übergeordnete ATM-Netz.

2. Verfahren nach Anspruch 1 zum Übermitteln von Informationspaketen zwischen einem Ursprungs-LEC eines ersten ELAN und einem einzigen Ziel-LEC eines zweiten ELAN,
**dadurch gekennzeichnet,**
daß der Ursprungs-LEC bei unbekannterer Ziel-ATM-Adresse eine Adreßauflösungsanfrage an einen LES des ersten ELAN sendet, daß diese von keinem LES des ersten ELAN auflösbare Adreßauflösungsanfrage über eine Netzzugangseinrichtung des ersten ELAN zur Übertragung in das CLS-Weitverkehrsnetz eingespeist wird und daß die zum zweiten ELAN übertragene Adreßauflösungsanfrage über eine Netzzugangseinrichtung zu einem LES des zweiten ELAN übertragen wird.

3. Verfahren nach Anspruch 1 zum Übermitteln von Informationspaketen zwischen einem Ursprungs-LEC eines ersten ELAN und mehreren Ziel-LEC mindestens eines zweiten ELAN,
**dadurch gekennzeichnet,**
daß der Ursprungs-LEC bei unbekannterer Ziel-ATM-Adresse eine Adreßauflösungsanfrage an einen Server des LAN-Emulations-Dienstes des ersten ELAN sendet, daß diese innerhalb des ersten ELAN nicht auflösbare Adreßauflösungsanfrage über eine Netzzugangseinrichtung des ersten ELAN zur Übertragung in das CLS-Weitverkehrsnetz eingespeist wird und daß die zu den ELANs der Ziel-LECs übertragene Adreßauflösungsanfrage jeweils über eine Netzzugangseinrichtung zu einem LES des LAN-Emulations-Dienstes jedes dieser ELANs übertragen wird.

4. Verfahren nach einem der Ansprüche 2 oder 3,
**dadurch gekennzeichnet,**
daß ein spezieller LEC als Teil der Netzzugangseinrichtung innerhalb jedes ELAN vorgesehen ist, der alle von den LES des jeweiligen ELAN nicht auflösbaren Adreßauflösungsanfragen erhält und diese an eine als Brücke zwischen dem einen verbindungslosen Dienst bereitstellenden Weitverkehrsnetz und dem jeweiligen ELAN vorgesehene Umsetzungsfunktion abgibt, daß diese Umsetzungsfunktion jeweils vom zugeordneten ELAN kommende Rahmen in das Rahmenformat des CLS-Weitverkehrsnetzes transformiert und diese Pakete an das CLS-Weitverkehrsnetz übergibt, und daß die Umsetzungsfunktion vom CLS-Weitverkehrsnetz an das der Umsetzungsfunktion zugeordneten ELAN adressierte Informationspakete in das ELAN-Rahmenformat transformiert und diese an den speziellen LEC abgibt.

5. Verfahren nach Anspruch 4,
**dadurch gekennzeichnet,**
daß die Umsetzungsfunktion von dem zugeordneten ELAN kommende Rahmen entsprechend ihrer Ziel-MAC-Adresse folgendermaßen behandelt:
- Datenrahmen, für die innerhalb der Umsetzungsfunktion kein Eintrag vorhanden ist, werden verworfen;
- Datenrahmen, für die ein Eintrag vorhanden ist, werden an das CLS-Weitverkehrsnetz übermittelt;
- Adreßauflösungsanfragen, für die kein Eintrag vorhanden ist, werden verworfen; und
- Adreßauflösungsanfragen, für die ein Eintrag in der Umsetzungsfunktion vorhanden ist, werden an das CLS-Weitverkehrsnetz übergeben.

6. Verfahren nach Anspruch 4,
**dadurch gekennzeichnet,**
daß die Umsetzungsfunktion von dem zugeordneten ELAN kommende Rahmen entsprechend ihrer Ziel-MAC-Adresse folgendermaßen behandelt:
- Datenrahmen, für die innerhalb der Umsetzungsfunktion kein Eintrag vorhanden ist, werden verworfen;
- Datenrahmen, für die ein Eintrag vorhanden ist, werden an das CLS-Weitverkehrsnetz übermittelt;
- Adreßauflösungsanfragen, für die kein Eintrag vorhanden ist, werden mit einer Gruppenadresse des CLS-Weitverkehrsnetzes versehen an das CLS-Weitverkehrsnetz übermittelt, wobei diese Gruppenadresse alle an das CLS-Weitverkehrsnetz angeschlossene ELANs adressiert.
- Adreßauflösungsanfragen, für die ein Eintrag in der Umsetzungsfunktion vorhanden ist, werden an das CLS-Weitverkehrsnetz übergeben.

7. Verfahren nach Anspruch 4, 5 oder 6,
**dadurch gekennzeichnet,**
daß die Umsetzungsfunktion von dem zugeordneten ELAN kommende Unicast-Datenrahmen immer verwirft.
